# EUROPEAN PATENT APPLICATION

(11) **EP 3 401 249 A1**
(43) Date of publication of application: **14.11.2018**
(21) Application number: 17170917.3
(22) Date of filing: 12.05.2017
(51) Int. Cl.: B65G 57/10, B65G 57/24, B65G 61/00, B65G 57/112

(54) **PALLETIZING APPARATUS**

(71) Applicant: Avanti Conveyors Ltd, Derbyshire, Derbyshire SK23 7SW (GB)
(72) Inventor: Mander, Simon, Derbyshire, Derbyshire SK23 7SW (GB)
(74) Representative: BiiP cvba

(57) **Abstract**

The present invention discloses a palletizing apparatus (100) for stacking layers (12) received from a receiving station (10), onto a pallet (12), at a palletization station (20). The palletizing apparatus comprises a primary stacking means (110) having a first vertical elevating means (112) extending from the receiving station towards the palletizing station, a conveyor means (114) configured onto the first vertical elevating means, and a first gripping means (116) movably positioned onto the conveyor means. The palletizing apparatus further includes a vertically movable centering frame (120) positioned above the palletizing station. The centering frame includes one or more set of centering plates wherein each set of the centering plate includes two centering plates (124a, 124b) positioned on opposite sides of the frame and extending downwardly towards the pallet of the palletizing station. In operation, the layer to be loaded onto the pallet is received onto the conveyor means of the primary stacking means which is then forwarded onto the pallet of the palletization station. Thereafter, the centering frame moves downwardly to align the layers loaded onto the pallet from outsides thereof.

## Description

### Field of Invention

The present invention relates generally to a palletizing apparatus. More particularly, the present invention relates to a palletizing apparatus that limits the misalignment between the layers stacked onto the pallet.

### Background of the Invention

Over the last few decades, there has been considerable efforts for improvising the shipment of products in various industries. Further, in the large scale production of wrapped or unwrapped products, such as food items, tiles, compact disks (CDS) or other relatively flat products or packages, it is often desirable to arrange groups of individual items for the purpose of shipment, or the like. Such rearrangement is generally done by placing items, in the form of stacks such as for example, in layers on a pallet.

Recently, the pallets have extensively been utilized in processing plants for handling various types of products, bundled together or disposed in cases, from one place to another. Further, there has been a rise in use of pallet for transportation of objects from one location to another, for example, in the transportation of goods from a manufacturer to a distributor.

Conventionally, the palletization was performed using articulated robots that used to grab a layer to be stacked and then dropping it onto the pallets. One such articulated robot include a manipulator and an arm. In operation, as the manipulator lifts the layer, the arm stretches and bends itself so as to locate the manipulator in a stacking position, whereupon the layer is released by the manipulator. This process is repeated to stack a plurality of loads. Such robots, while being slow, were not able to align the stacks properly and therefore are not preferred for stacking of the pallets.

Other similar mechanisms included frames having one or movable portions on which is disposed a head having a number of grippers attached to the head. The grippers operate to grab each package and lift and rotate the package into the desired position. Once in that position, the head is moved over the pallet and subsequently lowered the package to a desired position on the pallet.

Yet other mechanisms currently utilized include use of long fingers for gripping the layers to be loaded which then slides on machines, such as for example, a conveyor belt, towards the loading stations where elevator means are utilized for loading the layers on to the pallet. Further in some other examples, the gripper included two sets of fingers, each covering only half the length of the layer. The gripper also include two or more opposing centering plates for aligning the layer during the movement. These grippers are then mounted on wagon which moved towards the loading station where they are demounted gently thereby, maintaining the alignment of the layers while loading onto the pallet.

Such mechanism while being better than previous mechanism had several shortcomings. One such shortcoming included the process being slow as the wagon, or the like, after loading off the layer, moves back empty which slows down the process. Further, there was the issue of misalignment of the load when stacked onto the pallets.

In some examples, to overcome the problem of misalignment of the pallets, the clamping plates were utilized. These plates somewhat improved the alignment but were still not preferred because of the fact that the centering plates only centered the actual layer and some part of the layer underneath it. However, the bottom layers were not checked for alignment thereby, causing the formation of voids, gaps, or the like, and therefore and not aligning the pallets on the outside bottom.

Accordingly, the currently available palletizing solutions faces considerably significant problem of not aligning the layers properly on to the pallet which in turn, may cause damaged during subsequent transport, for example by adjacent pallets. Further, such a misalignment may prevent the pallet from being loaded onto various dispensing apparatus. When this occurs, the stack of pallets must be manually restacked so that the skewing of adjacent pallets is not so severe and so the restacked pallets may be loaded into the pallet dispensing apparatus.

In addition to the above problem, there is a serious problem of maintaining the stacking function at a speed consistent with that of the machine which produces the layers to be stacked. Additionally, While the above mentioned mechanisms are capable of moving packages into desired positions to form pallets of the items for shipment, the mechanisms require many separate structural items separate from the actual items or package conveyance line, which greatly increases the complexity and cost of the devices.

Therefore, there exists a need in art for an improved palletizing apparatus which while providing a more efficient and quicker operation and at a lower cost is able to maintain the alignment of the layers loaded onto the pallet in a convenient way.

### Summary of the Invention

In one aspect of the present disclosure, a palletizing apparatus for stacking layers received from a receiving station onto a pallet at a palletization station is disclosed. The palletizing apparatus includes a primary stacking means. The primary stacking means includes a first vertical elevating means extending from the receiving station towards the palletizing station. The primary stacking means further includes a conveyor means configured onto the first vertical elevating means extending between the receiving station towards the palletizing station. The Primary stacking means further includes a first gripping means movably positioned onto the conveyor means. The palletizing apparatus further includes a vertically movable centering frame positioned above the palletizing station. The centering frame includes one or more set of centering plates wherein each set of the centering plate includes two centering plates positioned on opposite sides of the frame and extending downwardly towards the pallet of the palletizing station. In operation, the layer to be loaded onto the pallet is received onto the conveyor means of the primary stacking means which is then forwarded onto the pallet of the palletization station. Thereafter, the centering frame moves downwardly to align the layers loaded onto the pallet from the outside thereof.

Preferably, the palletizing apparatus further includes an auxiliary palletizing means consisting of a second vertical elevating means extending away from the palletizing station. The second vertical means includes a horizontal guiding means meeting the conveyor means of the first vertical means at the palletizing station. The second vertical elevating means further includes a second gripping means positioned onto the horizontal guiding means and movable towards / away / onto the conveyor means of the first vertical elevating means.

Optionally, the receiving station is a layer formation station of a corrugated sheet converter.

Generally, the conveyor means includes a roller conveyor having a receiving portion separated from a discharge portion through a narrow conveying belt wherein the layer to be stacked is received at the receiving portion of the conveyor which is then forwarded to the conveying belt.

Potentially, the first gripping means includes a first finger set connected to a first drive unit for enabling a horizontal sliding movement of the first finger set onto the conveyor means.

Generally, the first finger set extends to a length more than half of a maximum length of the layer to be stacked.

Alternatively, the first finger set extends to a length more than the maximum length of the layer to be stacked.

Further potentially, the second gripping means comprises a second finger set connected to a second drive unit for enabling a horizontal sliding movement of the second finger set towards /away / onto the conveyor means.

Optionally, the second finger set extends to a length such that a combined length of the first finger set and the second finger set is more than the maximum length of the layer to be stacked.

Yet further potentially, the first driving unit and the second driving unit is selected from one of but not limited to an electric motor, hydraulic driving assemblies, or the like.

Optionally, the palletizing apparatus includes a control unit for remotely controlling the operations / stacking / alignment of the layers to be stacked.

In another aspect of the present disclosure, a method for stacking layers onto a pallet using a palletization apparatus having a primary stacking means and a vertical centering frame is disclosed. The method includes receiving a layer to be stacked on to the conveyor means of the first vertical elevating means. The layer received is at least partially supported onto the first finger set of the first gripping means. The method further includes adjusting the height of the first vertical elevating such that the height of the first finger set corresponds to a loading height at the palletization station. The method further includes sliding the first finger set towards the palletizing stations so as to place the layer onto the top of the pallet. The method further includes moving the centering frame vertically down onto the pallet such that the layer placed on the top of the pallet is centrally aligned by the opposite centering plates thereof. Thereafter, the first finger set slides back towards the receiving station and the vertical centering frame moves back in an upwards direction to its original position.

Optionally, the method further includes a step of elevating the first gripping mean thereby freeing the layer from the conveyor means before the step of sliding the layer towards the palletizing station.

Preferably, the first finger set completely supports the layer to be stacked.

moving the centering frame vertically down onto the pallet such that the layer placed on the top of the pallet is centrally aligned by the opposite centering plates thereof;

In yet another aspect of the present disclosure, a method for stacking layers onto a pallet using a palletization apparatus having a primary stacking means, an auxiliary stacking means and a vertical centering frame. The method includes receiving a layer to be stacked on to the conveyor means of the first vertical elevating means. The layer received is at least partially supported onto the first finger set of the first gripping means. The method further includes adjusting the height of the first vertical elevating such that the height of the first finger set corresponds to a height corresponding to the loading height at the palletization station. Further, the method includes adjusting the height of the second vertical elevating means corresponding to the loading height at the palletization station followed by the step of moving the second finger set to meet the first finger set and beneath the layer to be stacked such that the first finger set and the second finger set together supports the layer. Thereafter method further includes sliding the first finger set and the second finger set towards the palletizing stations so as to place the layer onto the top of the pallet. Thereafter, the first finger set slides back towards the receiving station, the second finger set slides out away from the palletizing station, and the vertical centering frame moves back in an upwards direction to its original position.

Optionally, the method further includes a step of pivotally elevating the first finger set and the second finger set such that the layer is supported thereon and is away from the conveyor means.

The details of one or more implementations are set forth in the accompanying drawings and the description below. Other aspects, features and advantages of the subject matter disclosed herein will be apparent from the description, the drawings, and the claims.

### Brief Description of drawings

FIG. 1 is a block diagram illustrating a palletizing apparatus, in accordance with one preferred embodiment of the present disclosure;
FIG. 2 is a block diagram illustrating a palletizing apparatus, in accordance with another embodiment of the present disclosure;
FIG. 3 illustrates a schematic view of the palletizing apparatus, in accordance with one preferred embodiment of the present disclosure;
FIG. 4a illustrates a schematic view of the palletizing apparatus, in accordance with another embodiment of the present disclosure;
FIG. 4b illustrates a schematic view of the palletizing apparatus, in accordance with another embodiment of the present disclosure;

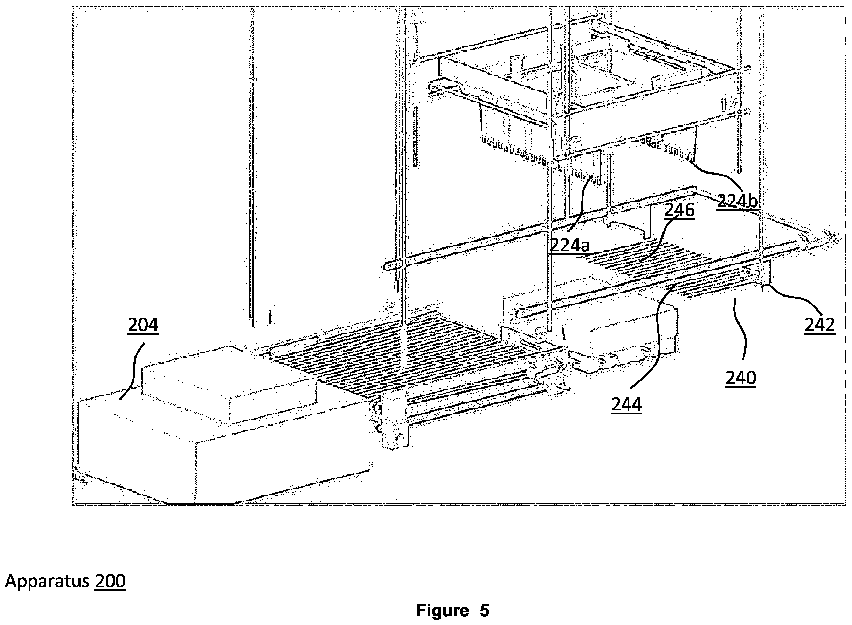

FIG. 5 illustrates a schematic view of the loaded pallet using the palletizing apparatus of the present disclosure;
FIG. 6 depicts a flowchart illustrating the steps for stacking the layers using the palletizing apparatus, in accordance with an embodiment of the present disclosure; and
FIG. 7 depicts a flowchart illustrating the steps for stacking the layers using the palletizing apparatus, in accordance with another embodiment of the present disclosure;

### Detailed Description of the Preferred Embodiments

As required, a schematic, exemplary-only embodiment of the present application is disclosed herein; however, it is to be understood that the disclosed embodiment is merely exemplary of the present disclosure, which may be embodied in various and / or alternative forms. Specific structural and functional details disclosed herein are not to be interpreted as limiting, but merely as a basis for the claims and as a representative basis for teaching one skilled in the art to variously employ the present disclosure in virtually any appropriately detailed structure.

Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

Exemplary embodiments may be adapted for many different purposes and are not intended to be limited to the specific exemplary purposes set forth herein. Those skilled in the art would be able to adapt the exemplary-only embodiment of the present disclosure, depending for example, on the intended use of adapted embodiment. Moreover, examples and limitations related therewith brought herein below are intended to be illustrative and not exclusive. Other limitations of the related art will become apparent to those of skill in the art upon a reading of the following specification and a study of the related figures.

The present application discloses a palletizing apparatus for stacking plurality of layers on a base pallet. The layers to be stacked may include any ready for shipment packages / items / object such as RCB boxes, trays, piles bundles, or the like of goods / materials, such as a dairy products, breweries, or any other kind of end user product. The palletizing apparatus while being fast and efficient, limits the possibility of a misalignment between the stacked layers. Such an alignment between the stacked layers avoids possibility of any damage to stacked object during transportation / dispensing / shipment etc. Further, the palletizing apparatus being simple and easy to operate enables the possibility of using the apparatus in existing production plants / converters, or the like. In a preferred embodiment, the apparatus includes a primary stacking means for stacking the layers onto the base pallet and a vertical centering frame for aligning the layers on pallet each time a new layer is added thereon. Such an alignment from a top direction after addition of each layer onto the pallet maintains the alignment starting from the bottom of the pallet and therefore, avoids formation of gaps, voids, etc at the bottom of the pallet due to misalignment. It is to be understood that unless otherwise indicated this invention need not be limited to applications in corrugated boxes / packages. As one of ordinary skill in the art would appreciate, variations of the invention may be applied to other applications such as in industries automobiles, dairy plants, health industry, brewing industry or the like and wherever the stacking of products, generally flat, is required. Moreover, it should be understood that embodiments of the present invention may be applied in combination with existing conveyors / elevators / various stacking tools, and / or machines, to achieve any desired application. It must also be noted that, as used in this specification and the appended claims, the singular forms "a," "an" and "the" include plural referents unless the context clearly dictates otherwise. Thus, for example, the term "a layer" is intended to mean a single layer or a pile of layers, "a connecting mechanism" is intended to mean one or more connecting mechanisms, or a combination thereof.

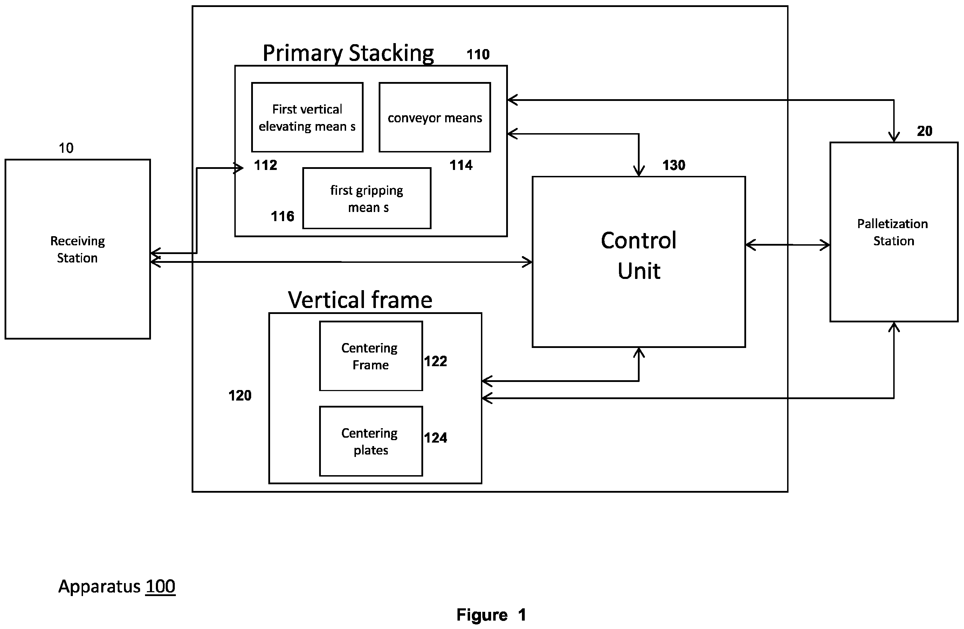

In description of the FIGS. 1-2 that follow, elements common to the schematic system will have the same number designation unless otherwise noted. In a first embodiment, as illustrated in FIG. 1, the present disclosure provides a palletizing apparatus **100** for stacking layers **12** received from a receiving station **10,** onto a base pallet **22** at the palletizing station **20.** The apparatus **100** includes a primary stacking means **110** for stacking the layers **12** onto the pallet **22,** and a vertical centering frame **120** for aligning the layers **12** when stacked onto the pallet **22.** The primary stacking means **110** includes a first vertical elevating means **112.** The primary stacking means **110** further includes a conveyor means **114** extending between and from the receiving station **10** towards the palletizing station **20.** The conveyor means **112** is adapted to receive the layer **12** from the receiving station **10.** The primary stacking means **110** furthermore includes a first gripping mean **116** movably positioned onto the conveyor means **114.**

The vertically movable frame **120** is a frame having four sides, positioned above the pallet **22** of the palletizing station **20 .** The frame **120** includes one or more set of centering plates, each set including two centering plates **124 a,** and **124 b.** The centering plate **124a** and **124b** are downwardly extended from the frame **120** such that when the frame **120** is moved down, the centering plate **124a** and **124b** aligns the layer **12** from opposite sides and starting from the bottom of the pallet **22.**

The apparatus **100** further includes a control unit **130** for controlling the operation / handling / of various components such as, first vertical elevating means **112** and / or conveyor means **114** and / or first gripping means **116** and / or centering plates **124** of the vertical frame **120** of the apparatus **100.**

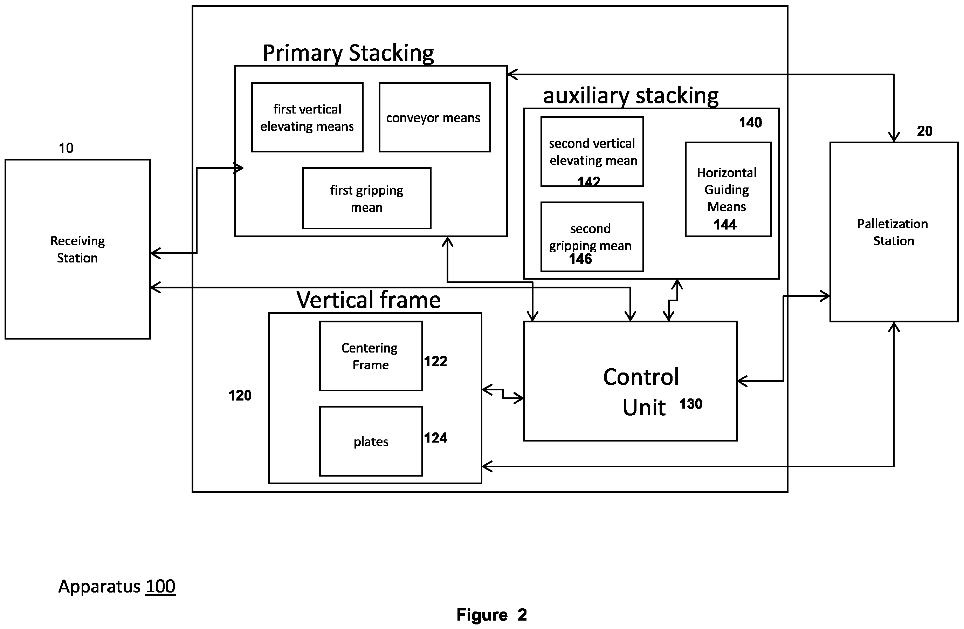

In a modification of the first embodiment, as illustrated in FIG. 2, the apparatus **100** includes an auxiliary stacking means **140.** The auxiliary stacking means **140** includes a second vertical elevating means **142** extending away from the palletizing station **20** in a direction opposite to the first receiving station **10.** The second vertical elevating means **142** meets the first vertical elevating **112** means at the palletizing station **20.** The auxiliary stacking means **140** further includes a horizontal guiding means **144** extending across the vertical elevating mean **110.** The auxiliary stacking means **140** further includes a second gripping means **146** movably positioned onto the horizontal guiding means **144.**

The auxiliary stacking mean **140** simplifies the apparatus **100** in that it provides an additional, the second gripping means **146,** to support a layer from both directions. Further, the second gripping means **146** allows the possibility of pulling the layers from both sides during alignment using the centering plate **24** of the vertical frame **120.** Such an arrangement results in a perfectly aligned pallet **22** stacked with the layers **12.**

FIGS. 1 and 2 schematically show the arrangement of the basic components of the apparatus of the present disclosure. However, in the construction of commercial functional units secondary components such as driving means, coupling means, harnesses, support structure and other functional components known to one of skill in the palletizing technology may be incorporated in the apparatus. Such commercial arrangements are included in the present invention as long as the structural components and arrangements disclosed herein are present. Accordingly, it is to be contemplated that the present palletizing apparatus may be configured to be operated in any working environment and may be incorporated in different ways such as in some embodiment the apparatus may be supported from the top using support arms, or the like. While in other embodiments, the apparatus may be incorporated on ground and supported from sides, or any other direction as deems possible without deviating from the scope of the current invention.

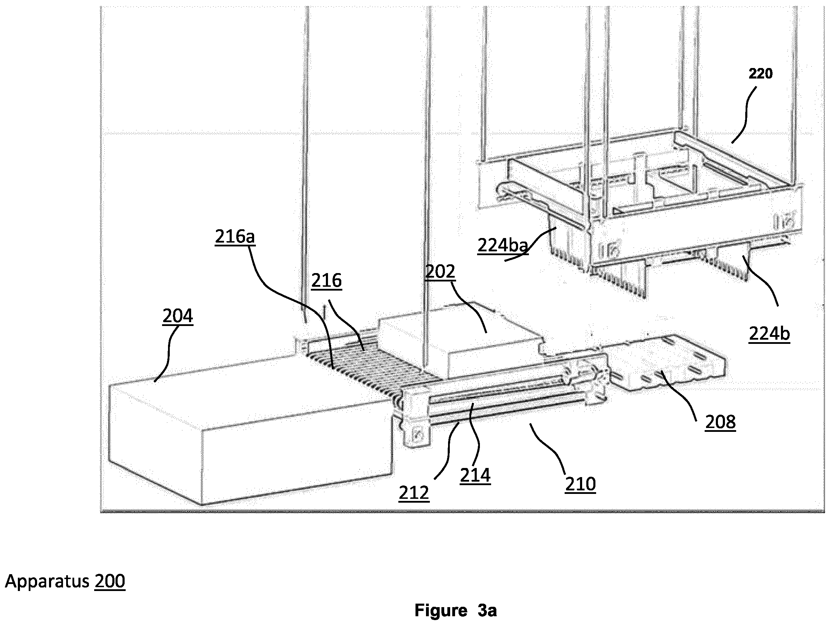

As already disclosed, Figs. 3 illustrates a palletizing apparatus **200** including a primary stacking means **210** for receiving layers **202** from the receiving stations **204** and stacking onto a pallet **206** at the palletizing station **208.** The primary stacking means **210** includes a first vertical elevating means **212** extending away from the receiving station **204** and towards the palletizing station **208.** The primary stacking means **210** further includes a conveyor means **214** positioned above the first vertical elevating means **214** extending from the receiving station **204** and towards the palletizing station **208.** The conveyor means **214** is adapted to receive the layer **202** to be stacked onto the pallet **206** at palletizing station **208.**The primary stacking **210** means further includes a first gripping means **216** movably positioned onto the conveyor means **214.**

The first vertical elevating means **212** as illustrated in fig, 3 may be any lifting device capable of making upward and downward movement thereby enabling lifting and lowering of devices etc, for example in current disclosure, a conveyor means **214,** and the first gripping means **216** positioned onto the conveyor means **214.** In a preferred embodiment, the first vertical elevating means **212** may include an elevator assembly having vertically disposed spaced-apart pairs of endless chains trained around sprockets wheels and having tray-supporting spanning bars arranged thereon at various intervals. In some embodiments the endless chains are replaced by lifting rods. In other embodiments, the vertical elevating means **212** may be any lifting mechanism, capable of lifting and / or lowering conveyor means.

The vertical elevating means **212** may further include one or more powering components, such as for example, in some cases a motor, or in other examples may be one or more actuating cylinders for enabling a vertical movement of the elevating means in an upward and / or a downward direction. In some other embodiments, the upward movement of the elevating means is performed using other powered elevating means, such as the hydraulic jack. Accordingly, the vertical elevating means **212** raises conveyor means **214** when the lifting mechanism is activated.

The vertical elevating means **212** is shaped to be incorporated in between the receiving station **204** and the palletizing station **208.** Further, it is sized to support the conveyor means **214** there upon such that a discharging end of the conveyor means **214** onto the pallet at the palletizing station. Further, the vertical elevating means **212** should be capable of bearing heavy weights so as to comfortably support, the conveyor means **214** along with the layers **202** / packages / items to be stacked.

The conveyor means **214** as illustrated in fig. 3 may be any known kind of conveyor means such as for example roller conveyor having a receiving portion (not shown) separated from a discharge portion (not shown) through a conveying belt **214a.** The receiving portion may be adapted to receive the layer from the receiving station **204.** In an embodiment of the present invention, the conveyor means **214** may be a roller in-feed conveyor. In other embodiments of the present invention, the conveyor means **214** may be any kind of suitable conveyor means for use along with the palletizing apparatus **200.**

The first gripping means **216** may be a finger based device for holding the layer placed onto the conveyor means **214.** In an embodiment of the present invention, the first gripping means **216** includes a first finger set **216a** connected to a first driving unit (not shown) for enabling a horizontal sliding movement of the first finger set **216a** onto the conveyor means **214.** The first driving unit may be any kind of known powering mechanism such as for example, electric motor, hydraulic powering devices, or any other kind of suitable powering device. In some embodiments, the first gripping means **216** includes an elevator means for elevating the first finger to a small height ranging between 10 mm to 50 mm.

Preferably, the length of the first finger set **216a** is more than the maximum length of the layer to be loaded onto the pallet. In another embodiment, the length of the finger set **216a** is more than half of the maximum length of the layer **202** to be stacked onto the pallet **206.**

The apparatus **200** further includes a vertically centering frame **220** for aligning the layers **202** stacked onto the pallet **206.** The vertically centering frame **220** may be a frame holding one or more sets of centering plates **224** positioned on opposite sides of the frame **220** extending downwardly. The vertical centering frame **220** includes an elevating mechanism (not shown) for enabling an upward and downward movement thereof. When declined towards the pallet **206,** the centering plates **224a, 224b** present on the opposite sides of the frame **220** aligns the pallet **206** from its opposite outsides such that the pallet **206** is aligned centrally.

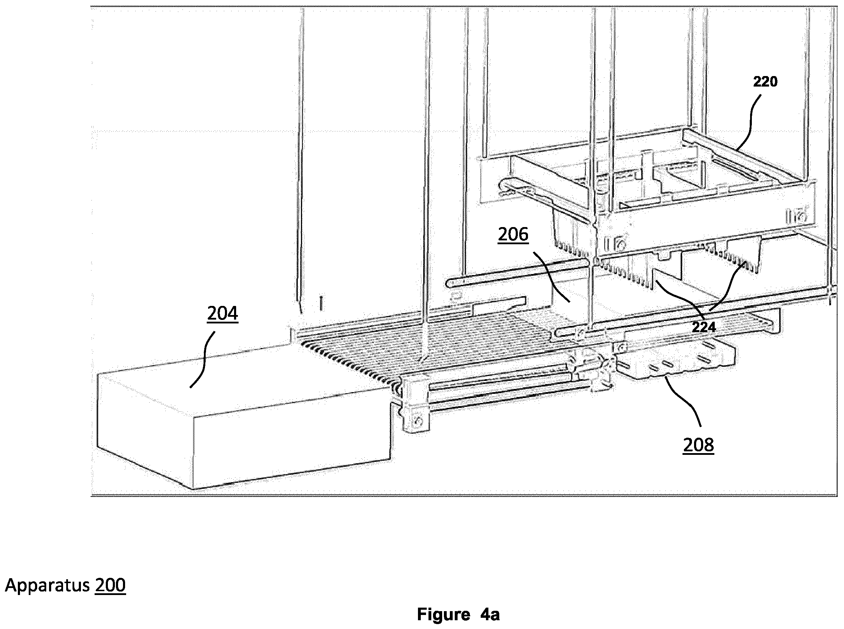

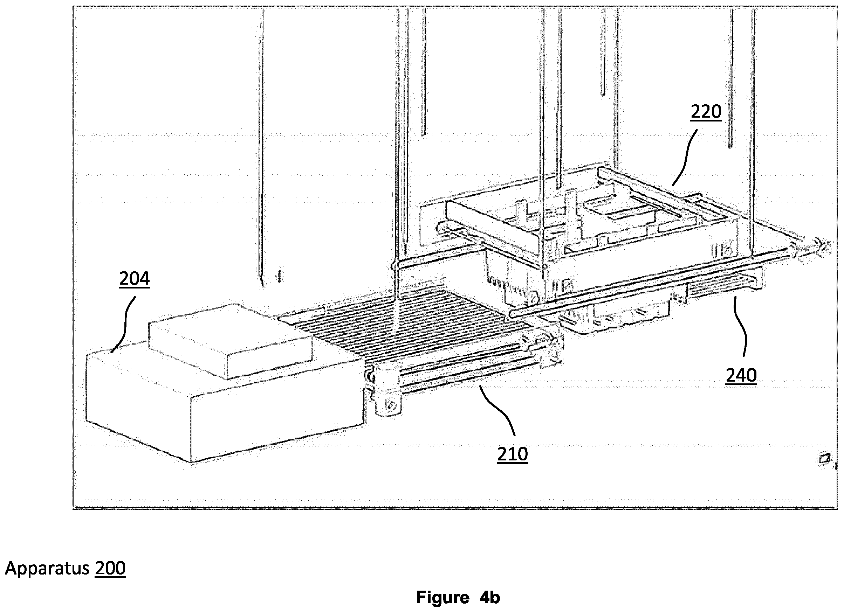

In another embodiment of the present invention as illustrated in Figs. 4a, 4b and 4, the palletizing apparatus **200** includes an auxiliary stacking means **240** in addition to the primary stacking means **210** and the vertical centering frame **220.** In such an embodiment, the primary stacking means **210** and the vertical centering frame **220** may have the configurations / specifications / details and variations similar to the embodiment as disclosed in refernce with Fig. 3. The additional auxiliary stacking means **240** in such an embodiment includes a second vertical elevating means **242** extending away from the palletizing station **208** in a direction opposite to the receiving station **204.** The second vertical elevating means **242** is generally similar to the first vertical elevating means **212** but includes an additional horizontal guiding component **244** configured thereon. The second vertical elevating means **242,** and the horizontal guiding means **244** meets first vertical elevating means **212** and the conveyor means **214** at the palletizing station **208.** The auxiliary stacking means **240** further includes a second gripping means **246,** generally similar to the first gripping means **216** movably positioned onto the horizontal guiding means **244** such that when at a same height, the second gripping means **246** is movable towards and onto the conveyor means **214** of the first vertical elevating means **212.**

In an embodiment of the present invention, the second gripping means **246** includes a second finger set **246a** connected to a second driving unit (not shown) for enabling a horizontal sliding movement thereof. The second driving unit may be any kind of known powering mechanism such as for example, electric motor, hydraulic powering devices, or any other kind of suitable powering device. In some embodiments, the second gripping means **246** includes an elevator means for elevating the second finger set **246a** to a small height ranging between 10 mm to 50 mm.

The length of the second gripping means **246** should be such that the combined length of the first gripping means **216** and the second gripping means **246** should be more than the maximum length of the layer **202** to be loaded onto the pallet **206.** In an embodiment of the present invention, the length of the second gripping mechanism **246** is more than half of the maximum length of the layer **202** to be stacked.

The palletizing apparatus **200** further includes a control unit 130 (depicted in fig. 1 but not shown in fig.) for remotely controlling the operations / handling of various components of the palletizing apparatus such as, primary stacking means, auxiliary stacking means and vertical centering frame and including the layers to be stacked. In some embodiments, the control unit 130 includes a data capturing unit for tracking the parameters such as for example, location of the layer to be stacked, loading height of the palletizing station, or the like. The control unit 130 may further include a processor unit for processing the data captured by the data capture unit on the basis of predetermined logics / rules for facilitating the operation within the system. The control unit may further include an instruction unit that delivers the instructions to various components such as various motors, driving units, conveyer means, vertical elevating means and centering frame, or the like, to facilitate a desired and smooth operation. The control unit 130 is generally connected to the various components of the apparatus **200** through connection mechanisms such as electric cables, data link cables, or the like

In some embodiments, the control unit 130 may be provided as a computer program product, such as may include a computer-readable storage medium or a non-transitory machine-readable medium maintaining instructions interpretable by a computer or other electronic device, such as to perform one or more processes. A non- transitory machine-readable medium includes any mechanism for storing information in a form (including a processing application or software) readable or interpretable by a machine (such as a computer). The non-transitory machine-readable medium may take the form of, but is not limited to, any known storage technique, including magnetic storage media, optical storage media, magnetooptical storage media; read only memory (ROM); random access memory (RAM); erasable programmable memory (including EPROM and EEPROM); flash memory; and otherwise.

In an embodiment of the present invention, the control unit 130 may include an automatic mode unit for automatizing the operation of the palletizing apparatus

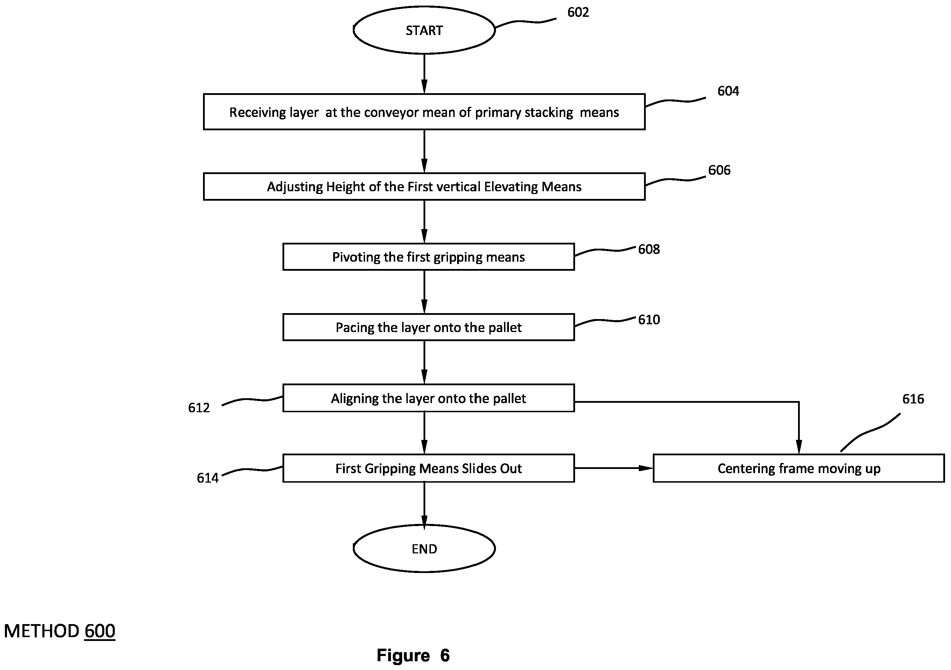

Fig. 6 with reference to Figs.1 and 3, is a flow diagram illustrating a method **600** for stacking and aligning layers **202** received from the receiving station **204,** onto the pallet **206** at the palletizing station **208** using the apparatus **200** of the present invention. The method **600** starts at step **602** and moves to step **604** where the layer **202** is received onto the primary stacking means **210** at a receiving portion of the conveyor means **214.** The receiving portion of the conveyor means **214** forwards the layer towards the conveying belt **214a** where it is at least partially supported onto the first finger set **216a** of the first gripping means **216.** In a preferred embodiment of the present invention, the layer **202** is supported completely onto the first finger set **216a.** The method **600** then proceeds to step **606** where a height of the first vertical elevating means **210** is adjusted such that the height of first finger set **216a** corresponds to a loading height at the palletizing station **208,** for example, just above the last layer **202** already stacked onto the pallet **206.**

Once the height of the vertical elevating means **212** is adjusted, the method **600** proceeds to step **608** where the first finger set **216a** is elevated up from the conveyor means **214** such that the layer **202** is free from the conveyor belt **214a** of the conveyor means **214.** At steps **610,** the first finger set **216a** slides towards the palletizing station **208** so as to place the layer **202** onto the pallet **206.** Once placed, the method **600** proceeds to step **612** where the vertical centering frame **220** moves down towards and above the pallet **206** so as to align the pallet **206** vertically from outside thereof through the centering plates **224a** and **224b.** Once aligned, the first finger set **216a** slides out and moves back towards the receiving portion of the conveyor means **214** at step **614** followed by retraction of vertical frame **220** in upward direction to keep the pallet aligned at step **616.** In an embodiment of the present invention, the step **614** and **616** may be performed simultaneously. In another embodiment of the present invention, the step **614** and **616** may be performed sequentially one after the other in any desired order.

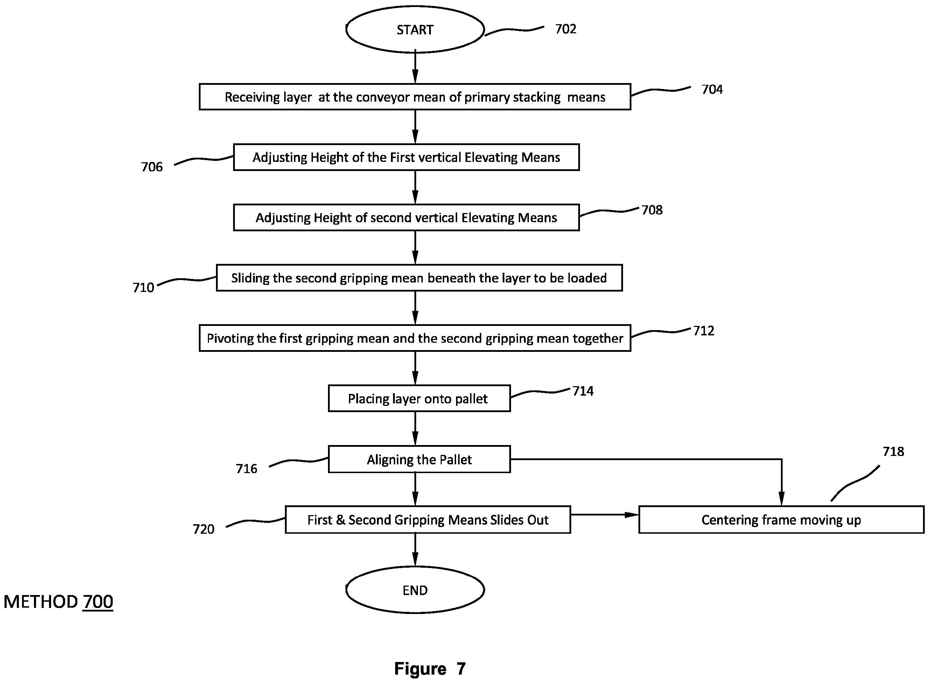

Fig. 7 with reference to Figs. 2 and 4, is a flow diagram illustrating an alternate method **700** for stacking and aligning layers **202** received from the receiving station **204,** onto the pallet **206** at the palletizing station **208** using the apparatus **200** of the present invention The method **700** starts at step **702** and proceeds to step **704** and **706,** same as step **604** and **606** of the method **600.** Once the height of the first elevating means **212** is adjusted at step **706,** the method **700** proceeds to step **708** where the height of second vertical elevating means is adjusted such that it corresponds to the loading height at the palletization station **208.** The method then proceed to step **710** where the second finger set **246a** is moved towards / and onto the conveyor means **214** meeting the first finger set **216a** and moving beneath the layer **202** to be stacked such that the first finger set **216a** and the second finger set **246a** together supports the layer **202.** Thereafter, the method moves to step **712** where the first finger set **216a** and the second finger set **246a** are elevated up from the conveyor means **214** such that the layer **202** is free from the conveyor belt **214a** and is completely supported onto the first finger set **216a** and the second finger set **246a.** At step 714, the first finger set **216a** and the second finger set **246a** slides towards the palletizing station **208** so as to place the layer **202** onto the pallet **206.** Once placed, the method 700 proceeds to step **716,** where the vertical centering frame **220** moves down above the pallet **206** so as to align the pallet **206** vertically from outsides thereof. Once aligned, the first finger set **216a** slides out towards the receiving portion of the conveyor means **214** and the second finger set **246a** slides out away from the palletizing station **208** in a direction opposite to the receiving station **204** at step **718** followed by retraction of vertical frame **220** in an upward direction to keep the pallet **206** aligned at step **720.**

Such a stacking of the layers 202 using the primary stacking means 210 as well as the auxiliary stacking means 240 have the advantage that in such an embodiment, the layer 202 may be pulled using first fingers set 216a as well as the second finger set 246a from opposite sides thereby enabling a centering from both sides.

Preferably, all the steps of method 600 and 700 maybe executed using the control unit from a remote place. In another embodiment, the control unit may be configured to work automatically without any intervention from an operator or a user.

Such a palletizing apparatus **200** while being faster than the previously available mechanisms keeps the stack properly aligned thereby avoiding a possibility of any damage to the stacks during shipment and / or transportation and / or dispensing.

### INDUSTRIAL APPLICABILITY

The present disclosure relates to a palletizing apparatus **200** for stacking plurality of layers onto a pallet preferably in the corrugated box manufacturing industries. Also, the palletizing apparatus **200** for improvising the shipment in various industries including but not limited to industries related to such as food items, tiles, compact disks (CDS) or other relatively flat products.

Since the palletization apparatus 200 may receive layer to be stacked from anywhere and not just a predefined receiving stations and therefore is adapted to be positioned at the end of a bottling, canning or packaging machine which places articles in layers / boxes /cartons, which are then stacked onto pallets for ready shipment.

The palletizing apparatus **200** of the current invention is far more efficient than the previously available palletization mechanisms. Further, while the alignment in previously known mechanism obviates the creation of voids / gaps at the bottom portion - the current palletizing apparatus, while aligning the layers from above at the outsides of the pallets. assures a proper alignment even at the bottom level of the pallet aligned and thereby avoiding the formation of any voids / gaps.

Further, the palletizing apparatus of the current invention is very simple to execute and may be incorporated into existing manufacturing / production plants etc, thereby avoiding any addition of huge costs. The palletizing apparatus may accordingly be adapted the apparatus in part or as a whole in currently manufacturing plants.

Referring to Figs. 6-7, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Throughout the specifications of the present disclosure, the term "comprising" means including but not necessarily to the exclusion of other elements or steps. In other words, the term comprising indicates an open list. Furthermore, all directional references (such as, but not limited to, upper, lower, inner, outer, upward, downward, inwards, outwards, right, left, rightward, leftward, inside, outside, top, bottom, above, below, vertical, horizontal, clockwise, and counter=clockwise, lineal, axial and/or radial, or any other directional and/or similar references) are only used for identification purposes to aid the reader's understanding of illustrative embodiments of the present disclosure, and may not create any limitations, particularly as to the position, orientation, or use unless specifically set forth in the claims. Moreover, all directional references are approximate and should not be interpreted as exact, but rather as describing a general indicator as to an approximate attitude.

Similarly, joinder references (such as, but not limited to, attached, coupled, connected, accommodated, and the like and their derivatives) are to be construed broadly and may include intermediate members between a connection of segments and relative movement between segments. As such, joinder references may not necessarily infer that two segments are directly connected and in fixed relation to each other.

In some instances, components are described with reference to "ends" having a particular characteristic and/or being connected with an-other part. However, those skilled in the art will recognize that the present disclosure is not limited to components which terminate immediately be-yond their points of connection with other parts. Thus, the term "end" should be interpreted broadly, in a manner that includes areas adjacent, rearward, forward of, or otherwise near the terminus of a particular segment, link, component, part, member or the like. Additionally, all numerical terms, such as, but not limited to, "second", "second", "third", "fourth", or any other ordinary and/or numerical terms, should also be taken only as identifiers, to assist the reader's understanding of the various embodiments, variations and/or modifications of the present disclosure, and may not create any limitations, particularly as to the order, or preference, of any embodiment, variation and/or modification relative to, or over, another embodiment, variation and/or modification.

As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

## Claims

1. A palletizing apparatus for stacking layers received from a receiving station onto a base pallet at a palletization station, the apparatus comprising
a primary stacking means, the primary stacking means comprising
a first vertical elevating means extending from the receiving station towards the palletizing station;
a narrow conveyor means configured on the first vertical means extending from the receiving station towards the palletizing station, the conveyor means adapted to receive the layers to be stacked from the receiving station;
and a first gripper means movably positioned onto the narrow conveyor means,
a vertically movable centering frame positioned above the palletizing station, the frame comprising one or more set of centering plates, each set comprising two plates positioned onto opposite sides and extending downwards towards the palletizing station;
**characterized in that**, when a layer to be stacked is received on the conveyor means, the first vertical means elevates to a height corresponding to a loading height at the palletization station such that the first gripping means at least partially holds and moves the layer towards the palletizing station to place it onto the base pallet, wherein further the centering frame moves down to centrally align the layer on to the pallet at the palletizing station.

2. The apparatus of claim 1, further comprising an auxiliary stacking means, the auxiliary stacking means comprising
a second vertical elevating means extending away from the palletizing station in a direction opposite to the receiving station, the second vertical elevating means comprising a horizontal guiding means and meeting the first vertical elevating means at the palletizing station;
a second gripping means movably positioned onto the second vertical elevating means wherein the second gripping means is movable towards and / or onto the conveyor means;
wherein when the layer to be stacked is received on the conveyor means, the second vertical elevating means is elevated to the loading height of the palletization station wherein further the second gripping means moves towards and onto the conveyor means meeting the first gripping means and beneath the layer to be stacked such that the first gripping means and the second gripping means together hold and moves the layer towards the palletizing station to place it on the pallet.

3. The apparatus of claim 1, wherein the conveyor means is a roller conveyor comprising a receiving portion extended towards a discharging portion through a conveyor belt.

4. The apparatus of claim 1, wherein the first gripping means comprises a first finger set connected to a first drive unit for enabling a horizontal sliding movement of the first finger set onto the conveyor means.

5. The apparatus of claim 1, wherein the second gripping means comprises a second finger set connected to a second drive unit for enabling a horizontal sliding movement of the second finger set towards /away / onto the conveyor means.

6. The apparatus of claim 4, wherein the first driving unit and the second driving unit is selected from one of but not limited to an electric motor, hydraulic driving assembly, or the like.

7. The apparatus of claim 1, wherein the apparatus comprising a control unit for remotely controlling the operations / stacking / alignment of the layers to be stacked.

8. The apparatus of claim 6, wherein the control unit comprises a data capturing unit for tracking the layer / height at which the layer is to be stacked; a processor unit for processing the data received and an instructor unit for delivering operational instructions to the palletizing apparatus.

9. The apparatus of claim 1, wherein the receiving station is a layer formation station of a corrugated sheet converter.

10. The apparatus of the claim 1, wherein the first finger set extends to a length more than half of a maximum length of the layer to be stacked.

11. The apparatus of claim 1, wherein the first finger set extends to a length more than the maximum length of the layer to be stacked.

12. The apparatus of the claim 2, wherein the second finger set extends to a length such that a combined length of the first finger set and the second finger set is more than the maximum length of the layer to be stacked.

13. A method of stacking loads onto a pallet using a palletization apparatus of aforementioned claims, the method comprising:-
receiving a layer to be stacked on to the conveyor means such that it at least partially supported onto the first finger set;
adjusting the height of the first elevating means such that the height of the first finger set corresponds to a height corresponding to the loading height at the palletization station;
sliding the layer to place it onto the top of the pallet;
moving the centering frame vertically down onto the pallet such that the layer placed on the top of the pallet is centrally aligned by the opposite centering plates thereof;
wherein when the layer is aligned onto the top of the pallet, the first finger set slides out towards the receiving end of the conveyor means and the centering frame moves vertically up to its original position.

14. The method of claim 13, wherein the sliding the layer comprises sliding the first finger set towards the palletizing station to place the layer onto the top of the pallet.

15. The method of claim 13 optionally comprising the step of:
adjusting the height of second elevating means such that the second finger is elevated to loading height at the palletizing station;
moving the second gripping means towards and onto the conveyor means to meet the first gripping means beneath the layer to be stacked such that the first gripping means and the second gripping means together hold the layer.

16. The method according to claim 13 and 15, wherein the sliding the layer comprises sliding the first finger set and the second finger set towards the palletizing station to place the layer onto the top of the pallet.

17. The method of claim 16, wherein when the layer is aligned onto the top of the pallet, the second finger set slides out in a direction away from the conveyor means.
